# EUROPEAN PATENT APPLICATION

(11) **EP 1 366 659 A1**
(43) Date of publication of application: **03.12.2003**
(21) Application number: 03380117.6
(22) Date of filing: 14.05.2003
(51) Int. Cl.: A01K 61/00

(54) **Container for oyster farming and the like**

(30) Priority: 30.05.2002 ES 200201379 U
(71) Applicant: Intermas Nets, S.A., 08450 Llinars del Vallès, (Barcelona) (ES)
(72) Inventor: Besas Camps, Luis, 08440-Cardedeu (Barcelona) (ES)
(74) Representative: Curell Aguilà, Marcelino

(57) **Abstract**

The invention refers to an oyster farming container consisting of a reticular hollow body (12) in the form of a parallelepipedic tubular container (13) having two mouths (3, 5) closed in a practicable manner by means of a laminate material rigid cover (11) in the form of an elongated rectangular trough-shaped member having a flat perimetric wall (14) extending in an external cantilevered flap (15) and an inclined wall (16) defined by a truncated pyramid surface separated into two parts by a cross passage (19) and closed by means of a perforated surface (17). In the flat perimetric wall (14) openings (18) are provided for passage of binding members constituting a practicable means of securing said cover (11) to the corresponding mouth (3, 5). The hollow body (12) may be flattened and stockpiled, preserving the memory of its parallelepipedic shape which is the shape adopted when utilised.

## Description

### Field of the invention

This invention relates to a container for oyster farming and the like, constituted by a hollow body which is formed by a water-permeable surface made from a material which is resistant to sea water and which, when in use, adopts the form of a substantially parallelepipedic tubular container having two closed mouths, with at least one of said mouths closed in a practicable manner.

### State of the art

Containers of the type cited above are already known. In such containers the hollow body is reticular and preferably has a tubular shape, where one of the mouths of said hollow body is firmly closed, whilst the other mouth is closed in a practicable manner.

Such known containers are constructed from tubular members of meshing fabric which are pre-shaped with a rectangular straight section with one end or mouth being closed by means of welding, leaving the other end or mouth open until the oysters to be raised have been placed inside, at which time such open end is closed by means of stitching, stapling or other system which is practicable and which allows the container to be reused.

These containers have the drawback that since the shape is substantially parallelepipedic and that since one end is welded shut, it results that this end, flattened by the weld, has a larger width than the body of the container whilst the height of such is reduced and thus its capacity, in such manner that said end does not allow full usage of the container capacity.

Furthermore, containers with a closed end occupy a significant amount of both transport and storage space.

Similarly, these containers are cumbersome to close with respect to their open loading end, where the same drawback concerning the reduction of useful capacity applies whether such end is closed by means of stitching or stapling.

It would thus be desirable to have such containers as would permit the use of all volume thereof, allowing the closing of said containers in an easily practicable manner and the stockpiling of said containers with minimum occupation of space.

The solution of designing the container reticular bodies in a foldable shape and providing at least one closing cover have been adopted to achieve such characteristics.

### Summary of the invention

In accordance with the preceding solution, the container for oyster farming and the like cited at the beginning of this document has been developed, constituted by a hollow body which is formed by a water-permeable surface, preferably a reticular surface, produced from a material which is resistant to sea-water, such as for example a synthetic plastic material, which, in use, adopts the form of a substantially parallelepipedic tubular container and which has two closed mouths, generally coincident with the smaller faces of said container, and in which at least one of said two mouths is closed in a practicable manner, and in which said container in accordance with the invention includes at least one device for closing said mouth in a practicable manner, said device for practicable closing being constituted by a rigid covering body which has means for an adjusted fit in the interior of said mouth and means by which it may be practicably fastened to said mouth.

Preferably, said hollow body has one of its mouths closed by means of welding of the mouth's walls, whilst the other mouth is closed by means of said rigid covering body. More preferably, optimally, the reticular body has both of its mouths closed by means of respective rigid covering bodies.

Advantageously, said rigid covering body is of laminate material and adopts the form of an elongated rectangular trough-shaped member, in which there is differentiated a flat perimetric wall, proportioned so as to fit in at least one of the mouths of said hollow body, such flat perimetric wall extending in one respect in an external cantilevered flap, and, in another respect, extending in an inclined wall which is defined by a truncated pyramid surface which is closed by means of a perforated surface, there being provided in such flat perimetric wall means for attachment of said rigid covering body to the corresponding mouth of said hollow body.

Optionally, said rigid covering body is constituted by shaping a reticular material and it adopts the form of an elongated rectangular trough-shaped member, in which there is differentiated a flat perimetric wall, proportioned so as to fit in at least one of the mouths of said hollow body, such flat perimetric wall extending in one respect in an external cantilevered flap and, in another respect, extending in an inclined wall which is defined by a truncated pyramid surface which extends to form a base for the trough-shaped member.

Preferably, some openings are provided in the perimetric flat wall of said covering body for the passage of binding, pinning or other members which constitute means for securing in a practicable manner said rigid covering body to the corresponding mouth of said hollow body.

Advantageously, said disposition of the elongated rectangular trough-shaped member is differentiated, as concerns the truncated pyramid surface, in two or more consecutive portions which, preserving their shape, are separated by cross passages which do not affect the truncated pyramidicity of such trough-shaped member.

Advantageously, the perforated surface which constitutes the base of the elongated rectangular trough-shaped member of the rigid covering body is one of the group that includes plane surfaces and curved surfaces, whether considered separately or with respect to possible combinations.

Finally, preferably, said hollow body has longitudinal edges, corresponding to the parallelepipedic shape which shall be adopted in use, pre-shaped with shape memory in such manner that they allow flat stockpiling of said reticular hollow bodies and recovery of the parallelepipedic shape when said hollow body is used.

### Brief description of the drawings

To facilitate comprehension of the preceding ideas, a preferred embodiment of the invention is given below, with reference to the accompanying illustrative drawings, in which:
Figure 1, represents, in perspective, a portion of a tubular meshing fabric adequate for forming a conventional oyster farming container.
Figure 2, represents, in perspective, a conventional container which has been obtained by means of weld-closing one of the ends of the portion of tubular meshing fabric of the previous Figure, such as is supplied to oyster farming undertakings.
Figure 3, represents, in perspective, the container of the previous Figure once filled with the oyster spat to be raised, having closed the loading mouth by means of stitching, stapling or other practicable system which allows reutilization of the container, and in which the useful longitude of said container has been indicated.
Figure 4 represents, in perspective, a manner of presenting the Figure 2 container, wherein the container has been improved by means of parallelepipedic shaping of the useful part of the tubular body thereof.
Figure 5 represents, in perspective, the Figure 4 container once filled with the oyster spat to be raised and with the loading mouth closed in a conventional manner.
Figure 6 represents, in perspective, the Figure 4 container with a practicable closing device for the loading mouth of said container in accordance with the invention.
Figure 7 represents, in perspective, a portion of the tubular meshing fabric, of extruded type, presenting a parallelepipedic form whose mouths are constituted by the smaller bases, and two practicable closing devices for both mouths, all of which is in accordance with the invention.
Figure 8 represents, in perspective, a stockpile of the shaped tubular meshing fabric bodies of the previous Figure, in which said containers are diagrammatically shown in their folded position, clearly showing the reduced transport and storage volume.

### Detailed description of an embodiment of the invention

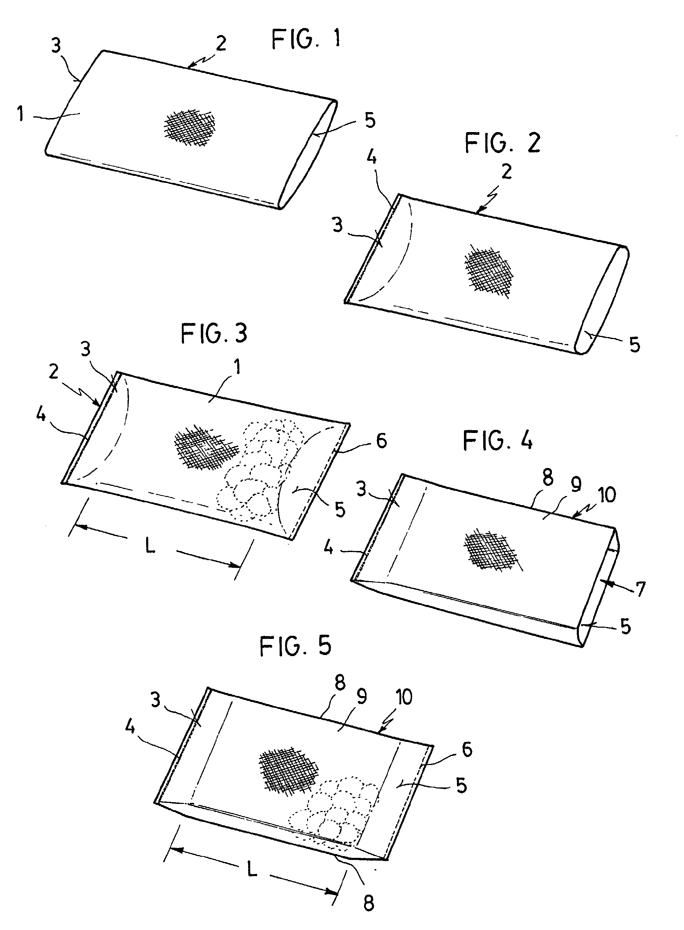

In Figure 1 a portion of the tubular meshing fabric is shown, concretely one of the type obtained by extrusion of a synthetic resin, which constitutes a body 1 of the appropriate dimensions in order to be used as container for oyster spat and oysters in oyster farming undertakings.

Body 1, to be converted into a container 2 for oyster farming, needs to have one of its mouths 3 closed by means of welding 4 or other means, as is shown in Figure 2, whilst the other mouth 5 serving as loading mouth remains open, which shall be closed by means of a stitched seal 6 or other practicable means once the oyster spat or the oysters have been introduced, as can be seen in Figure 3.

These known containers 2, suffer from the drawback that the ends of said containers have a lesser height than the rest, due to the manner in which the mouths are closed, from which it results that only area L can be used to raise oysters, whilst the end areas remain empty.

Furthermore, in said containers 2, in which the body 1 consists of a portion of extruded tubular meshing fabric, which is produced in a flattened form, the problem raised is that the body 1, as shown in Figure 1, presents a virtual interior space which must be created by separating the walls of said tubular meshing fabric, which hinders the introduction of the oyster spat and the oysters difficult. In addition, said walls exert pressure on the oysters which may be prejudicial.

In order to solve the preceding drawback, the solution adopted has been to bestow an interior space 7 of real volume to the mesh tube by shaping it parallelepipedically, thermically securing the longitudinal edges 8 of same, as is shown in Figure 4, in which one can see the new body 9 of container 10 with a mouth or end sealed by means of welding 4 and the other mouth, which is for loading, open in order that container 10 receive the oyster spat or oysters, after which said mouth shall be closed by means of stitching, as is shown in Figure 5, or by other means which shall be detailed below. This container 10 offers the advantage of actually having an interior space 7, which facilitates the introduction of the oysters and the raising of such, although, however, it continues to present the disadvantage that the ends of such container remain unused and the useful space is thus that indicated by L, as is the case in Figure 3.

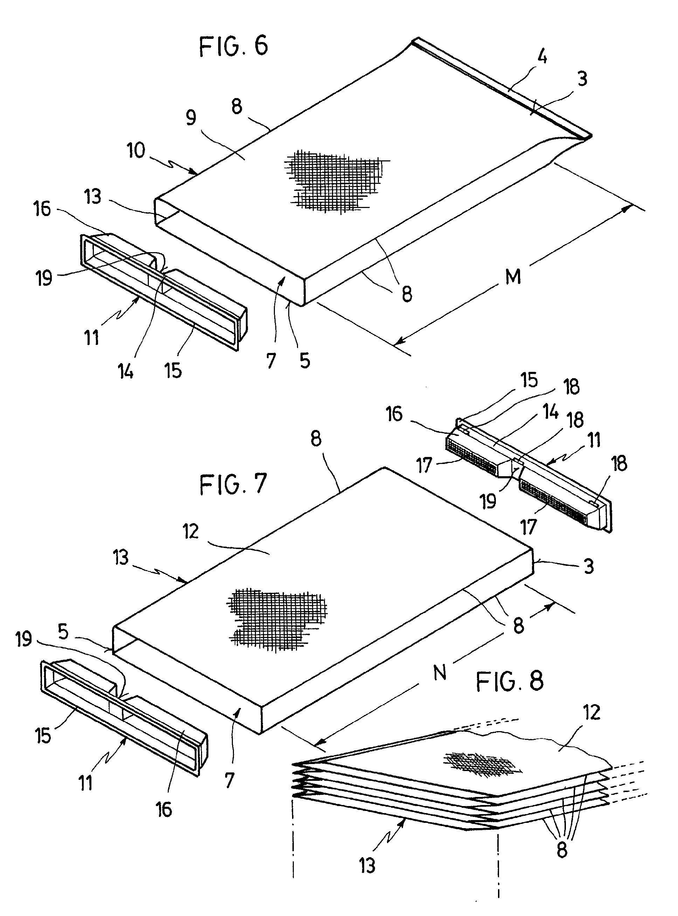

In light of all of the above, the solution has been adopted to close the loading mouth 5 by means of a rigid covering body 11 which, in order to fit the container, adjusts inside said loading mouth, as is shown in Figure 6, such that, once the container 10 has been loaded and closed with the rigid covering body 11, the useful space of the container 7 as indicated by M, will be greater than the space indicated by L, given that closing the mouth by means of the covering body 11 allows practically all of the end of container 10 to be used, given that the reduction in volume of the ends does not occur as is the case with Figure 5.

Nevertheless, there exists the drawback that the bodies 9 of container 10 with a real interior space 7 have a structure that makes stockpiling exaggeratedly voluminous, affecting not only transport but also storage.

In the interest of obtaining a useful dimension that is greater than that indicated by L, in Figures 3 and 5, and by M, in Figure 6, and in order that the bodies 9 of the containers 10 can present a minimum volume when stockpiled, the solution adopted has been to parallelepipedically shape the bodies 12 of the containers 13, as is shown in Figure 7, whilst the mouths 3 and 5 are left open and which are closed, when opportune, by means of respective rigid covering bodies 11, in which manner a useful space referenced by N is obtained in container 13 which is greater than the cited L and M, given that almost the total capacity of body 12 is utilised.

Furthermore, the parallelepipedic shape of body 12, as can be seen in Figure 7, allows stockpiling in a compact manner, as is shown diagrammatically in Figure 8. The parallelepipedic shape of the bodies 12, is achieved by dihedral angle thermoforming of the edges 8 and, due to the shape memory of the synthetic material, the bodies can change automatically from a folded position as in Figure 8 to an unfolded position as in Figure 7.

The rigid covering bodies 11 are of laminate material and by thermoforming they adopt the form of an elongated rectangular trough-shaped member, in which there is differentiated a perimetric flat wall 14, proportioned so as to fit in the mouths 3 and 5 of the bodies 9 and 12 of the containers 10 and 13, which, in one respect, is extended in an external cantilevered flap 15 and, in another respect, is extended in an inclined wall 16 defined by a rectangular truncated pyramid surface which closes with a base 17 having a perforated surface, there being provided in said perimetric flat wall 14 means for attachment of the rigid covering body 11 to the body 9 or 12 of the containers 10 and 13 in mouths 3 and/or 5 thereof, such means consisting, for example, in openings 18 through which a stitching cord passes.

Shaping of the rigid covering bodies 11 as elongated rectangular trough-shaped members, may be differentiated in two or more consecutive portions, as is illustrated in Figures 6 and 7, which whilst retaining their shape are separated by a cross passage 19 which does not modify the truncated pyramidicity of the trough-shaped member.

Furthermore, and although such has not been represented since considered obvious, the rigid covering bodies 11 may be shaped from mesh sheets, in which case the stretches of meshing substitute for the openings of the base 17, which may be flat or curved, and substitute for the openings 18 in the case of attachment by stitching.

## Claims

1. Container for oyster farming and the like, constituted by a hollow body (9, 12) which is formed by a water-permeable surface made from a material which is resistant to sea water and which, when in use, adopts the shape of a substantially parallelepipedic tubular container (10, 13) having two closed mouths (3, 5), with at least one (5) of said mouths (3, 5) closed in a practicable manner, **characterised in that** it comprises at least one practicable closing device for said mouth (5), said practicable closing device constituted by a rigid covering body (11) having means for an adjusted fit within said mouth (5) and means (18) for practicable attachment to said mouth (5).

2. Container for oyster farming and the like in accordance with Claim 1, **characterised in that** said permeable surface constitutive of the hollow body (9, 12) is a reticular surface.

3. Container for oyster farming and the like in accordance with Claims 1 or 2, **characterised in that** said hollow body (9, 12) has one of its mouths (3, 5) closed by means of welding (4) of its walls, whilst the other mouth (5) is closed by means of said rigid covering body (11).

4. Container for oyster farming and the like in accordance with Claims 1 or 2, **characterised in that** said hollow body (9, 12) has both of its mouths (3, 5) closed by means of said rigid covering bodies (11).

5. Container for oyster farming and the like in accordance with any of the Claims 1 to 4, **characterised in that** said rigid covering body (11) is of laminate material and adopts the form of an elongated rectangular trough-shaped member, in which is differentiated a flat perimetric wall (14), proportioned so as to fit in at least one of the mouths (3, 5) of said hollow body (9, 12), said flat perimetric wall (14) extending in one respect in an external cantilevered flap (15) and, in another respect, extending in an inclined wall (16) which is defined by a truncated pyramid surface closed with a perforated surface (17), there being provided in said flat perimetric wall (14) means (18) for attachment of said rigid covering body (11) to the corresponding mouth (3, 5) of said hollow body (9, 12).

6. Container for oyster farming and the like in accordance with any of the Claims 1 to 4, **characterised in that** said rigid covering body (11) is constituted by shaping of a reticular material and adopts the form of an elongated rectangular trough-shaped member, in which is differentiated a flat perimetric wall, proportioned so as to fit in at least one of the mouths (3, 5) of said hollow body, such flat perimetric wall (14) extending in one respect in an external cantilevered flap and, in another respect, extending in an inclined wall which is defined by a truncated pyramid surface which extends to form a base for the trough-shaped member.

7. Container for oyster farming and the like in accordance with Claim 5, **characterised in that** said rigid covering body (11) has openings (18) in its flat perimetric wall (14) for passage of binding, stapling or other members which constitute means of securing in a practicable manner said rigid covering body (11) to the corresponding mouth (3, 5) of said hollow body (9, 12).

8. Container for oyster farming and the like in accordance with any of the Claims 4 to 7, **characterised in that** said arrangement of the elongated rectangular trough-shaped member is differentiated, with reference to the truncated pyramid surface, into two or more consecutive portions which, whilst preserving their shape, are separated by cross passages (19) which do not modify the truncated pyramidicity of such trough-shaped member.

9. Container for oyster farming and the like in accordance with any of the Claims 5 to 8, **characterised in that** the perforated surface (17) which constitutes the base of the elongated rectangular trough-shaped member of the rigid covering body (11) is one of the group which includes plane surfaces and curved surfaces, whether considered separately or with respect to possible combinations.

10. Container for oyster farming and the like in accordance with Claim 1, **characterised in that** said hollow body (9, 12) presents longitudinal edges (8) corresponding to the parallelepipedic form which shall be adopted in use, pre-shaped with shape memory in order to allow flat stockpiling of said reticular hollow bodies (9, 12) and recuperation of the parallelepipedic form when such hollow body (9, 12) is utilised.
